# FASCICULE DE BREVET EUROPEEN

(11) **EP 0 876 870 B1**
(45) Date de publication et mention de la délivrance du brevet: **23.06.2004**
(21) Numéro de dépôt: 98400957.1
(22) Date de dépôt: 17.04.1998
(51) Int. Cl.: B23K 26/00, B23K 26/10, F02F 1/20

(54) **Appareil et procédé de traitement par laser de la paroi de cylindre d'un moteur à combustion interne**
Vorrichtung und Verfahren zum Laserbehandeln der Zylinderinnenfläche einer Brennkraftmaschine
Device and process for laser treatment of the internal surface of a cylinder for an internal combustion engine

(30) Priorité: 21.04.1997 FR 9704905
(43) Date de publication de la demande: 11.11.1998
(73) Titulaire: AUTOMOBILES PEUGEOT, 75116 Paris (FR); AUTOMOBILES CITROEN, 92200 Neuilly-sur-Seine (FR)
(72) Inventeur: Gillet, Bernard, 78990 Elancourt (FR)
(74) Mandataire: Berger, Helmut

(56) Documents cités:
- DE-A- 4 217 530
- DE-A- 4 316 012
- DE-U- 29 506 005
- FR-A- 2 733 327
- JP-A- 60 003 463
- PATENT ABSTRACTS OF JAPAN vol. 10, no. 222 (M-504), 2 août 1986 & JP 61 058951 A (DAIHATSU MOTOR CO LTD), 26 mars 1986,

## Description

La présente invention concerne un appareil et un procédé de traitement par laser de la surface d'une paroi d'alésage d'un cylindre par exemple ceux d'un moteur à combustion interne notamment de véhicule automobile.

De tels appareil et procédé ont pour but d'effectuer une opération de finition des surfaces internes des cylindres du bloc moteur afin d'assurer le compromis entre l'étanchéité et le grippage de la chambre de combustion de chaque cylindre tout au long de la course du piston à l'intérieur de celui-ci.

On connaît la technique de rodage utilisant un outil abrasif communément appelé "rodoir" constitué de pierres ou d'abrasifs diamantés permettant un usinage de précision de la surface de paroi de l'alésage du cylindre correspondant de façon à donner à ce cylindre ses dimensions finales. Le rodoir produit dans la surface usinée, par la combinaison de ses mouvements relatifs de rotation autour de l'axe du cylindre, de translation suivant cet axe et, le cas échéant, d'expansion lorsque ce rodoir est expansible, des empreintes ou traces de rodage ayant l'allure de sillons se croisant. Ces sillons réalisés sur l'ensemble de la surface de la paroi de l'alésage du cylindre déterminent les conditions de rétention du lubrifiant constitué par de l'huile, lesquelles sont importantes pour l'obtention des performances souhaitées des moteurs thermiques et la diminution de la pollution générée par ceux-ci. Il est également possible d'améliorer l'état de surface de la paroi d'alésage du cylindre par l'adjonction d'une étape de finition par rodage dit "plateau".

On connaît également selon DE 295 06 005 et DE 43 16 012 l'utilisation de faisceaux laser pour effectuer la dernière étape de l'usinage de précision des surfaces d'alésages de cylindres d'un moteur à combustion interne.

Cependant, ces techniques connues d'usinage de précision ont pour inconvénient majeur de ne pas maîtriser complètement et de façon simultanée à la fois la profondeur, le pas et la position des sillons sur les parois internes des cylindres.

La présente invention a pour but d'éliminer l'inconvénient ci-dessus en proposant un appareil de traitement par laser de la surface d'une paroi d'alésage d'un cylindre par exemple ceux d'un moteur à combustion interne notamment de véhicule automobile pour un usinage de précision de cette surface, comprenant un miroir plan disposé à l'intérieur du cylindre de manière à diriger le faisceau du laser vers la paroi de l'alésage du cylindre, le miroir étant disposé sur un support incliné d'un angle déterminé par rapport à l'axe du cylindre et qui est caractérisé en ce que les moyens de liaison entre le miroir et le support peuvent être excités par un circuit de commande pour permettre de micro-déplacements du miroir relativement au support et réaliser ainsi sur la paroi de l'alésage du cylindre des sillons définissant des empreintes ayant des caractéristiques de formes fermées, par exemple en cercles, ellipses ou rectangulaires, et de profondeur constituant des réservoirs de retenue de lubrifiant adaptés aux conditions de charge du cylindre.

De préférence, les moyens de liaison comprennent des éléments piézoélectriques et le circuit de commande fournit à chaque élément piézoélectrique une tension de commande de déformation de cet élément.

Les éléments piézoélectriques sont au nombre de trois et sont disposés sur le support à 120° les uns des autres.

Le support du miroir fait partie d'un ensemble motorisé lui permettant un déplacement en rotation autour de l'axe du cylindre et un déplacement en translation suivant cet axe.

Cet ensemble motorisé comprend un arbre dont une extrémité à l'intérieur du cylindre supporte le supporc du miroir et deux moteurs électriques, de préférence asservis, mécaniquement reliés à l'autre extrémité de l'arbre située à l'extérieur du cylindre de façon que l'un des moteurs entraîne en rotation l'arbre et l'autre moteur déplace en translation celui-ci.

L'appareil comprend également un circuit de commande numérique des deux moteurs électriques de façon à coordonner les déplacements conjugués en rotation et en translation de l'arbre portant le support du miroir pour réaliser les empreintes de formes variées adaptées aux conditions de charge du cylindre.

Une tête optique, logée en partie dans le cylindre, reçoit le faisceau laser par l'intermédiaire d'une fibre optique pour le focaliser sur le miroir plan et est montée pivotante sur un axe de pivotement pour permettre son inclinaison par rapport à l'axe du cylindre.

De préférence, un moteur électrique est prévu pour commander le pivotement de la tête de focalisation et est actionné par le circuit de commande numérique précité qui gère également le fonctionnement du circuit de commande d'excitation des éléments piézoélectriques.

L'angle d'inclinaison de la tête de focalisation est situé dans une fourchette allant jusqu'à environ 30° de part et d'autre de l'axe du cylindre.

Selon un autre mode de réalisation, le miroir de renvoi est logé dans une partie d'extrémité d'une tête optique de focalisation du faisceau laser sur le miroir qui est incliné d'un angle déterminé par rapport à l'axe du cylindre pour diriger le faisceau laser radialement au cylindre à travers une fenêtre de la partie d'extrémité de la tête optique et est fixé à cette partie d'extrémité par des moyens de liaison pouvant être excités par un circuit de commande pour permettre de micro-déplacements du miroir relativement à la partie d'extrémité et, ainsi, du point d'impact du faisceau laser sur la surface de la paroi d'alésage de façon à réaliser sur cette surface des sillons définissant des empreintes ayant des caractéristiques de formes fermées, par exemple en cercles, ellipses ou rectangulaires, et de profondeur constituant des réservoirs de retenue de lubrifiant adaptés aux conditions de charge du cylindre.

Les moyens de liaison comprennent des éléments piézoélectriques et le circuit de commande fournit à chaque élément piézoélectrique une tension de commande de déformation de cet élément.

Avantageusement, l'angle d'inclinaison du miroir de renvoi est de 45°.

L'appareil comprend en outre un ensemble motorisé permettant de déplacer la tête optique en translation suivant l'axe du cylindre et de déplacer la partie d'extrémité en rotation autour de cet axe relativement au corps de la tête optique.

De préférence, le circuit de commande est une commande numérique programmée pour piloter les moyens de liaison du miroir de renvoi et l'ensemble motorisé pour réaliser les empreintes de formes variées adaptées aux conditions de charge du cylindre.

La tête optique comprend une lentille de focalisation montée dans un support par l'intermédiaire d'entretoises internes positionnant la lentille à une distance focale prédéterminée du miroir et un moyen de réglage précis de la position axiale du support de la lentille relativement au corps de la tête optique.

Avantageusement, le moyen de réglage comprend un outil en forme de bouton de manoeuvre muni d'un doigt pouvant être introduit dans un trou radial de la partie d'extrémité de la tête optique et se terminant par un ergot coopérant avec une rainure du support de la lentille pour déplacer axialement le support en tournant le doigt introduit dans le trou radial à l'aide du bouton de manoeuvre.

La tête optique comprend également un conduit aménagé dans le corps de celle-ci pour acheminer un gaz d'apport, tel que de l'azote ou de l'argon, dans la fenêtre de la partie d'extrémité de la tête optique au droit de cette fenêtre.

La tête optique comprend en outre des moyens de refroidissement internes permettant de maintenir la température du miroir à une valeur déterminée.

De préférence, le laser est du type YAG et fonctionne en mode continu ou en mode déclenché et la commande numérique effectue la synchronisation de la source laser en mode déclenché.

L'invention vise également un procédé de traitement par laser de la surface d'une paroi d'alésage d'un cylindre par exemple ceux d'un moteur à combustion interne notamment de véhicule automobile pour un usinage de précision de cette surface, consistant à réfléchir le faisceau du laser sur la surface de la paroi d'alésage du cylindre par un miroir plan disposé sur un support incliné d'un angle déterminé par rapport à l'axe X-X' du cylindre, et qui est caractérisé en ce qu'il consiste à exciter de façon commandée des moyens de liaison entre le support et le miroir pour qu'il effectue de micro-déplacements relativement au support de façon que le faisceau du laser soit déplacé relativement à la surface de la paroi d'alésage du cylindre, le faisceau ayant une intensité permettant de réaliser sur la surface de la paroi d'alésage du cylindre des sillons définissant des empreintes ayant des caractéristiques de formes fermées, par exemple en cercles, ellipses ou rectangulaires, et de profondeur constituant des réservoirs de retenue de lubrifiant adaptés aux conditions de frottement et de température que peut subir la surface de la paroi d'alésage du cylindre.

Les empreintes ont des formes différentes d'un endroit à l'autre de la surface de la pièce.

Dans le cas d'une paroi d'alésage d'un cylindre de moteur à combustion interne, les empreintes ont des formes différentes de haut en bas de la surface de la paroi d'alésage du cylindre et les empreintes supérieures emmagasinent plus de lubrifiant que les empreintes inférieures.

Un même sillon peut avoir une profondeur différente et les empreintes peuvent être juxtaposées pour former un réseau de circulation du lubrifiant.

L'invention sera mieux comprise et d'autres buts, caractéristiques, détails et avantages de celle-ci apparaîtront plus clairement dans la description explicative qui va suivre faite en référence aux dessins annexés donnés uniquement à titre d'exemple illustrant deux modes de réalisation de l'invention et dans lesquels :
La figure 1 est un schéma synoptique de l'appareil de traitement conforme à l'invention.
La figure 2 représente schématiquement en développement un détail de la surface usinée d'une paroi d'alésage d'un cylindre de moteur thermique et montrant les différents profils d'empreintes réalisées par le faisceau laser.
La figure 3 est une vue en coupe agrandie suivant la ligne III-III de la figure 2 et montrant un profil du sillon d'une empreinte de profondeur différente.
La figure 4 représente un autre mode de réalisation de l'appareil de traitement de l'invention.
La figure 5 est une vue en coupe suivant la ligne V-V de la figure 4 et montrant un système de refroidissement du miroir de l'appareil de traitement de la figure 4.
La figure 6 est une vue agrandie de la partie cerclée en VI de la figure 4.
La figure 7 est une vue de dessus suivant la flèche VII de la figure 6 et représentant de façon détaillée une partie du miroir de renvoi logé dans l'appareil de la figure 4.

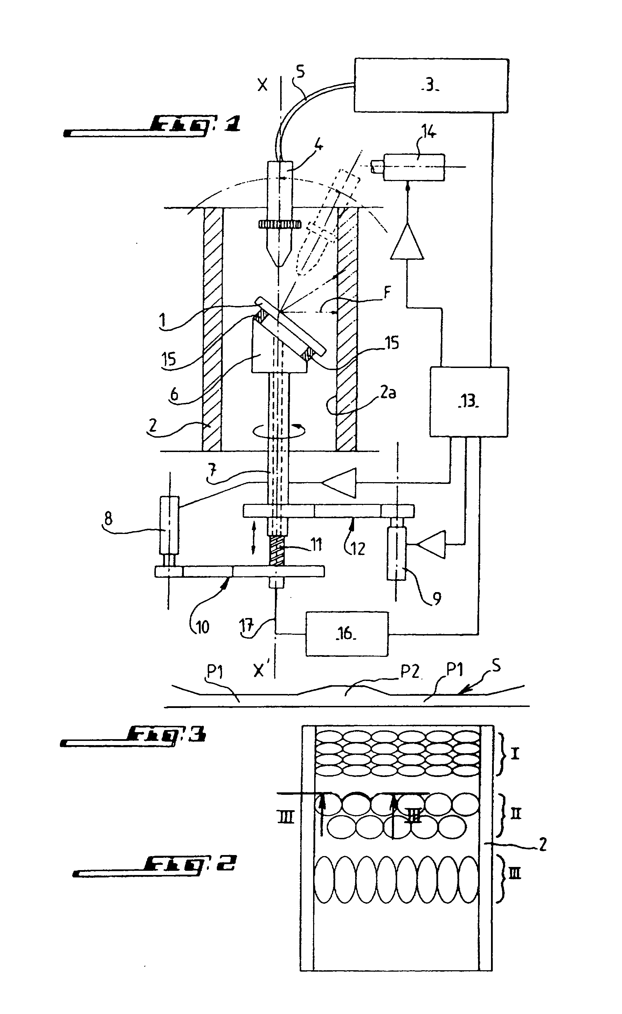

En se reportant à la figure 1, l'appareil de l'invention permettant un traitement par laser des surfaces de parois d'alésages des cylindres d'un moteur à combustion interne comprend un miroir plan 1 disposé à l'intérieur du cylindre 2 de manière à diriger le faisceau F provenant d'une source laser 3 vers la paroi de l'alésage 2a du cylindre 2 afin d'effectuer un usinage de précision de la surface de cette paroi comme on le verra ultérieurement.

Le faisceau laser peut être transporté par fibre optique en ce qui concerne le laser YAG ou directement lorsque la source est du type excimère vers la tête optique 4 pénétrant en partie dans ce cylindre. Cette tête permet de focaliser le faisceau laser sur le miroir de renvoi 1. La tête optique 4 est montée sur un axe de pivotement permettant son inclinaison par rapport à l'axe longitudinal X-X' du cylindre 2 à une position angulaire déterminée comprise entre environ 0° et 30° de part et d'autre de cet axe.

Le miroir 1, qui est de préférence incliné de 45° par rapport à l'axe X-X' du cylindre 2, est disposé sur une face inclinée d'une même valeur d'un support 6 qui fait partie d'un ensemble motorisé permettant au support 6 d'être déplacé en rotation autour de l'axe X-X' et en translation suivant cet axe.

L'ensemble motorisé comprend un arbre 7 disposé sensiblement coaxialement à l'axe X-X' et dont l'extrémité située à l'intérieur du cylindre 2 supporte le support 6 du miroir 1. Cet ensemble comprend également deux moteurs électriques 8, 9 reliés mécaniquement à l'autre extrémité de l'arbre 7 située à l'extérieur du cylindre 2 de façon que le moteur électrique 8 puisse entraîner en translation suivant l'axe X-X' l'arbre 7 et le moteur électrique 9 puisse entraîner en rotation cet arbre autour de l'axe X-X'. Plus précisément, le moteur électrique 8 entraîne en rotation, par l'intermédiaire d'un engrenage 10, une vis sans fin 11 sur laquelle est monté l'arbre 7 de sorte qu'une rotation de la vis sans fin 11 provoque un déplacement correspondant en translation de cet arbre. Le moteur électrique 9 entraîne en rotation l'arbre 7 autour de l'axe X-X' par l'intermédiaire d'un autre engrenage 12.

Un circuit de commande numérique 13 est prévu pour commander les deux moteurs électriques asservis 8, 9 de façon à coordonner les déplacements conjugués en translation et en rotation de l'arbre 7 et donc du miroir 1. Le circuit 13 commande en outre un autre moteur électrique 14 de commande du pivotement de la tête optique de focalisation 4 à une inclinaison souhaitée.

Le miroir 1 est assemblé sur la paroi inclinée du support 6 par l'intermédiaire de moyens de liaison 15 pouvant être excités de manière à permettre des déplacements très faibles du miroir 1 et déterminer ainsi des formes diverses des empreintes sur la paroi d'alésage du cylindre correspondant. De préférence, ces moyens de liaison comprennent des éléments piézoélectriques situés entre le miroir 1 et la paroi inclinée du support 6, par exemple au nombre de trois en étant alors disposés à 120° les uns des autres, et un circuit électronique de commande 16 est prévu pour fournir à chaque élément piézoélectrique 15 un signal de tension d'excitation déformant l'élément piézoélectrique pour assurer les micro-déplacements du miroir 1. Le circuit électronique 16, qui est activé par le circuit de commande numérique 13, est situé bien entendu à l'extérieur du cylindre 2 et est relié électriquement aux éléments piézoélectriques 15 par un câble électrique 17 traversant la vis sans fin 11 et donc l'arbre 7 pour aboutir aux éléments piézoélectriques 15 au travers de la paroi inclinée du support 6.

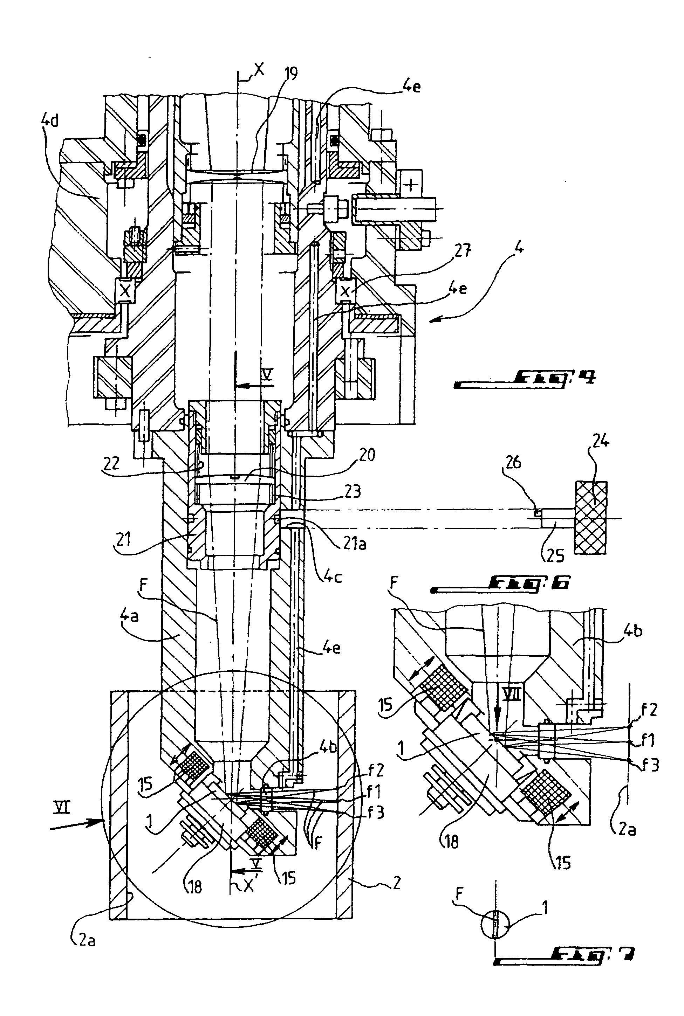

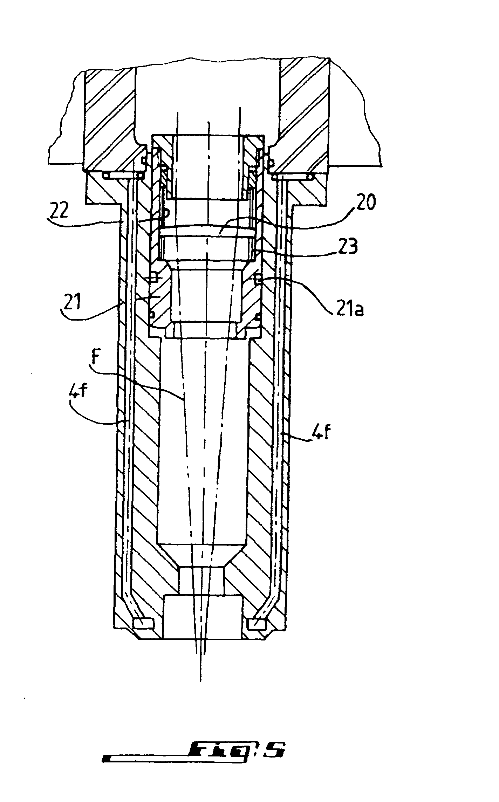

La figure 2 montre des empreintes qui peuvent être réalisées par le faisceau laser au contact de la paroi du cylindre et qui sont obtenues par une combinaison des mouvements relatifs de la tête optique 4 et du miroir de renvoi 1 effectués sous le contrôle du circuit de commande numérique 13. On constate ainsi que l'appareil de l'invention permet d'obtenir l'effet de "structuration" sur la paroi d'alésage du cylindre 2 en maîtrisant à la fois la profondeur, le pas et la position des sillons avec la possibilité d'obtenir une profondeur différente P1, P2 sur un même sillon S comme représenté en figure 3 et également d'obtenir des formes différentes de profil tenant compte de la vitesse de déplacement du piston dans le cylindre. Ainsi, la figure 2 montre que la zone supérieure I de la paroi interne du cylindre 2 peut être traitée par le laser de l'appareil de l'invention suivant un profil déterminé permettant d'emmagasiner autant de lubrifiant (huile) que possible, la zone sensiblement médiane II de cette paroi peut être traitée suivant un autre profil pour emmagasiner moins de lubrifiant que dans la zone I et la zone inférieure III de cette paroi peut être traitée suivant encore un autre profil différent pour emmagasiner moins de lubrifiant que les deux autres zones. Autrement dit, l'appareil de traitement de l'invention permet notamment de réaliser des formes différentes d'empreintes à tout endroit souhaité de la paroi interne du cylindre. Ainsi, les caractéristiques de forme et de volume (profondeur des sillons) des empreintes constituant les réservoirs de retenue de lubrifiant interviennent directement dans les conditions de lubrification et de frottement issues du contact entre le segment d'un piston et la chemise du cylindre et influent dans le rendement global du moteur. La modification des caractéristiques de ces réservoirs en fonction de la hauteur de la paroi d'alésage du cylindre permet de s'adapter aux conditions de pression et de vitesse engendrées par le mouvement relatif du piston dans le cylindre. La figure 2 montre que les empreintes peuvent être juxtaposées afin de constituer un réseau de circulation du lubrifiant. Le circuit de commande numérique 13 peut être programmé pour réaliser à grande vitesse des configurations de formes variées des empreintes adaptées aux conditions de charge de chaque cylindre du moteur.

De préférence, le laser est du type YAG et peut fonctionner soit en mode continu, soit en mode déclenché. Dans ce dernier cas, le circuit de commande numérique 13 effectue la synchronisation de la source laser.

Les figures 4 à 7 représentent un deuxième mode de réalisation de l'appareil de traitement par laser de la surface d'une paroi d'alésage d'un cylindre de moteur à combustion interne.

L'appareil selon ce deuxième mode de réalisation est agencé pour réaliser sur la surface de paroi d'alésage 2a du cylindre 2 des sillons définissant des empreintes identiques aux empreintes de la figure 2 réalisées par l'appareil décrit en figure 1.

Les éléments de l'appareil du second mode de réalisation identiques à ceux de l'appareil du premier mode de réalisation et/ou accomplissant les mêmes fonctions que ceux-ci portent les mêmes chiffres de référence.

Selon ce deuxième mode de réalisation, le miroir de renvoi 1 est logé dans une partie d'extrémité 4a de la tête optique 4 plongeant au moins partiellement dans le cylindre 2 et est incliné d'un angle déterminé, par exemple de 45°, par rapport à l'axe X-X' du cylindre 2 de façon à diriger le faisceau laser F provenant de la source laser (non représentée en figure 4) radialement vers la paroi de l'alésage 2a du cylindre 2 au travers d'une fenêtre 4b réalisée radialement dans la partie d'extrémité 4a de la tête optique 4.

Le miroir 1 est fixé dans la partie d'extrémité 4a par l'intermédiaire de moyens de liaison 15 qui, comme dans le premier mode de réalisation, sont constitués par des éléments piézoélectriques situés entre le miroir 1 et des parois correspondantes de la partie d'extrémité 4a et pouvant être excités par un circuit électronique de commande identique au circuit 16 du premier mode de réalisation pour déformer chaque élément piézoélectrique 15 et effectuer des micro-déplacements du miroir 1. Le circuit électronique de commande est activé par le circuit de commande numérique 13 de la figure 1 et est relié électriquement aux éléments piézoélectriques 15 par un câble électrique (non représenté). Le miroir 1 est de préférence monté dans un support formant cassette 18 démontable de la partie d'extrémité 4a de la tête optique 4.

La tête optique 4 permettant d'assurer le chemin optique de la source laser au miroir de renvoi 1 comprend une lentille de colimation 19 fixée en partie supérieure de la tête et une lentille de focalisation 20 fixée dans un support 21 fixé dans la partie d'extrémité 4a de la tête 4, comme on le verra ultérieurement. La lentille de focalisation 20 est fixée dans le support 21 par l'intermédiaire de deux entretoises respectivement supérieure 22 et inférieure 23 situées de part et d'autre de la lentille 20 et venant en butée sur des épaulements opposés du support 21. Le choix des longueurs des deux entretoises 22, 23 permet de déterminer la distance ou longueur focale de la lentille 20 de manière à régler le point d'impact du faisceau laser F sur la paroi d'alésage 2a du cylindre 2. Un réglage plus fin ou plus précis du point focal de la lentille 20 est assuré par un outil en forme de bouton de manoeuvre 24 comportant un doigt central 25 faisant saillie de celui-ci et se terminant par un ergot 26 décentré relativement au doigt 25. Le doigt 25 peut être introduit dans un trou radial 4c réalisé à travers la paroi latérale de la partie d'extrémité inférieure 4a de la tête optique 4 de façon que l'ergot 26 puisse pénétrer dans une rainure 21a réalisée sur le pourtour externe du support cylindre 21. En position engagée de l'ergot 26 dans la rainure 21a et en tournant dans un sens ou dans l'autre le bouton de manoeuvre 24, le support 21 peut être axialement déplacé suivant l'axe X-X', vers le haut ou vers le bas, pour précisément régler la distance focale de la lentille 20. Une fois ce réglage effectué, le support 21 est immobilisé dans la partie d'extrémité 4a par tout moyen approprié connu en soi, par exemple par une vis de blocage (non représentée) traversant la paroi latérale de la partie d'extrémité 4a et dont l'extrémité libre pénètre dans un perçage conjugué du support 21.

Un ensemble motorisé (non représenté) est prévu pour permettre un déplacement du corps 4d de la tête optique 4 en translation suivant l'axe X-X' du cylindre et déplacer en rotation la partie d'extrémité 4a relativement au corps 4d autour de l'axe X-X', par l'intermédiaire d'un roulement à billes 27 interposé entre la partie 4a et le corps 4d.

Le circuit à commande numérique est programmé pour piloter les moyens de liaison piézoélectriques 15 du miroir 1 et l'ensemble motorisé ainsi que la source laser de manière à déplacer le faisceau F dont les points d'impact f1, f2, f3 focalisés sur la paroi d'alésage 2a du cylindre 2 ont des intensités telles que des sillons sont formés sur la surface de la paroi 2a pour définir des empreintes ayant des caractéristiques de forme et de profondeur comme représentées à la figure 2. La figure 6 montre le déplacement du point d'impact du faisceau laser en f1, f2 et f3 sur la surface de la paroi d'alésage 2a lorsque les éléments piézoélectriques 15 sont excités dans la direction symbolisée par les doubles flèches sur cette figure. Ainsi, le circuit à commande numérique permet de réaliser à très grande vitesse des configurations de formes d'empreintes variées adaptées aux conditions de charge de chaque cylindre du moteur. Comme pour l'appareil du premier mode de réalisation, l'appareil de la figure 4 permet de modifier les caractéristiques des réservoirs de lubrifiant constitués par les empreintes sur la surface de la paroi d'alésage du cylindre 2 en fonction de la hauteur dans le fût de ce cylindre comme représenté en figure 2 et adapter ces empreintes aux conditions de pression et de vitesse engendrées par le mouvement relatif du piston dans le cylindre. Les paramètres des empreintes sont maîtrisés par la commande numérique pour obtenir des profondeurs variables des sillons définissant ces empreintes et donner un profil d'empreinte autorisant une régulation de la circulation de lubrifiant à l'intérieur de l'empreinte comme représenté en figure 3.

Il est également préférable dans ce second mode de réalisation d'utiliser une source laser du type YAG pouvant fonctionner soit en mode continu, soit en mode déclenché et, dans ce dernier cas, la synchronisation de la source laser est effectuée par la commande numérique.

La figure 4 montre que la tête optique comporte un conduit interne 4e s'étendant sensiblement parallèlement à l'axe X-X' de celle-ci et débouchant dans la fenêtre 4b de sortie radiale du faisceau laser F, au droit de celle-ci, de façon à injecter dans la fenêtre un gaz d'apport, tel que de l'azote ou de l'argon, destiné à éviter des effets d'oxydation sur la surface de la paroi d'alésage 2a du cylindre 2.

La tête optique 4 comprend en outre un système de refroidissement interne représenté en figure 5 et permettant de maintenir à une température déterminée notamment le miroir de renvoi 1. Ce système de refroidissement utilise à cet effet une circulation d'eau, éventuellement refroidie, qui circule par des conduits longitudinaux 4f de la tête optique jusqu'au miroir 1.

L'appareil de traitement par laser de la paroi d'alésage de chaque cylindre d'un moteur à combustion interne décrit dans chacun des deux modes de réalisation ci-dessus permet de maîtriser parfaitement les trajectoires du faisceau laser de manière à réaliser des sillons définissant des empreintes de formes fermées et de profondeur (volume) adaptés à la zone de frottement de la paroi avec le ou les segments du piston.

La souplesse d'utilisation de l'appareil de traitement de l'invention tel que décrit ci-dessus permet d'adapter le traitement optimum aux seules parties de la paroi interne de chaque cylindre concernées par les fortes contraintes de température et d'effort lors du fonctionnement du moteur thermique. L'appareil de traitement de l'invention permet de réaliser l'opération de structuration, en complément de l'opération de rodage habituelle, sur les parois internes des cylindres d'un moteur thermique en maîtrisant la profondeur, le pas, la position et la forme des sillons gravés sur chacune de ses parois. La maîtrise parfaite des paramètres précités permet d'optimiser les consommations d'huile et, par conséquent, de réduire efficacement la pollution de ce moteur.

## Revendications

1. Appareil de traitement par laser de la surface d'une paroi d'alésage d'un cylindre (2) par exemple ceux d'un moteur à combustion interne notamment de véhicule automobile pour un usinage de précision de cette surface, comprenant un miroir plan (1) disposé à l'intérieur du cylindre (2) de manière à diriger le faisceau (F) du laser vers la paroi (2a) de l'alésage du cylindre (2), le miroir (1) étant en outre disposé sur un support (6) incliné d'un angle déterminé par rapport à l'axe (X-X') du cylindre (2), **caractérisé en ce que** les moyens de liaison (15) entre le miroir (1) et le support (6) peuvent être excités par un circuit de commande (16) pour permettre de micro-déplacements du miroir (1) relativement au support (6) et réaliser ainsi sur la paroi de l'alésage du cylindre (2) des sillons définissant des empreintes ayant des caractéristiques de formes fermées, par exemple en cercles, ellipses ou rectangulaires, et de profondeur constituant des réservoirs de retenue de lubrifiant adaptés aux conditions de charge du cylindre (2).

2. Appareil selon la revendication 1, **caractérisé en ce que** les moyens de liaison précités comprennent des éléments piézoélectriques (15) et le circuit de commande (16) fournit à chaque élément piézoélectrique (15) une tension de commande de déformation de cet élément.

3. Appareil selon la revendication 2, **caractérisé en ce que** les éléments piézoélectriques (15) sont au nombre de trois et sont disposés sur le support (6) à 120° les uns des autres.

4. Appareil selon l'une des revendications précédentes, **caractérisé en ce que** le support (6) du miroir (1) fait partie d'un ensemble motorisé lui permettant un déplacement en rotation autour de l'axe (X-X') du cylindre (2) et un déplacement en translation suivant cet axe.

5. Appareil selon la revendication 4, **caractérisé en ce que** l'ensemble motorisé comprend un arbre (7) dont une extrémité à l'intérieur du cylindre (2) supporte le support (6) du miroir (1) et deux moteurs (8, 9), de préférence asservis, mécaniquement reliés à l'autre extrémité de l'arbre (7) située à l'extérieur du cylindre (2) de façon que l'un (9) des moteurs entraîne en rotation l'arbre (7) et l'autre moteur (8) déplace en translation cet arbre.

6. Appareil selon la revendication 5, **caractérisé en ce qu'**il comprend un circuit de commande numérique (13) des deux moteurs électriques (8, 9) de façon à coordonner les déplacements conjugués en translation et en rotation de l'arbre (7) portant le support (6) du miroir (1) pour réaliser les empreintes de formes variées adaptées aux conditions de charge du cylindre.

7. Appareil selon l'une des revendications précédentes, **caractérisé en ce qu'**il comprend une tête optique (4) logée en partie dans le cylindre (2), recevant le faisceau laser (F) par l'intermédiaire d'une fibre optique (5) pour le focaliser sur le miroir (1) et montée pivotante sur un axe de pivotement pour permettre son inclinaison par rapport à l'axe (X-X') du cylindre (2).

8. Appareil selon les revendications 6 et 7, **caractérisé en ce qu'**il comprend un moteur électrique (14) de commande du pivotement de la tête optique de focalisation (4) et qui est actionné par le circuit de commande numérique (13) précité.

9. Appareil selon les revendications 2 et 6, **caractérisé en ce que** le circuit de commande numérique (13) gère le fonctionnement du circuit de commande des éléments piézoélectriques (15).

10. Appareil selon la revendication 7 ou 8, **caractérisé en ce que** l'angle d'inclinaison de la tête optique de focalisation (4) est situé dans une fourchette allant jusqu'à environ 30° de part et d'autre de l'axe (X-X') du cylindre (2).

11. Appareil de traitement par laser de la surface d'une paroi d'alésage d'un cylindre (2) par exemple ceux d'un moteur à combustion interne notamment de véhicule automobile pour un usinage de précision de cette surface, comprenant un miroir plan (1) disposé à l'intérieur du cylindre (2) de manière à diriger le faisceau (F) du laser vers la paroi (2a) de l'alésage du cylindre (2), le miroir (1) étant logé dans une partie d'extrémité (4a) d'une tête optique (4) de focalisation du faisceau laser sur le miroir (1) qui est incliné d'un angle déterminé par rapport à l'axe X-X' du cylindre pour diriger le faisceau laser (F) radialement au cylindre (2) à travers une fenêtre (4b) de la partie d'extrémité (4a) de la tête d'optique (4), **caractérisé en ce que** le miroir (1) est fixé à la partie d'extrémité (4a) par des moyens de liaison (15) pouvant être excités par un circuit de commande pour permettre de micro-déplacements du miroir (1) relativement à la partie d'extrémité (4a) et, ainsi, du point d'impact du faisceau laser (F) sur la surface de la paroi d'alésage (2a), de façon à réaliser sur cette surface des sillons définissant des empreintes ayant des caractéristiques de formes fermées, par exemple en cercles, ellipses ou rectangulaires, et de profondeur constituant des réservoirs de retenue de lubrifiant adaptés aux conditions de charge du cylindre.

12. Appareil selon la revendication 11, **caractérisé en ce que** les moyens de liaison comprennent des éléments piézoélectriques (15) et le circuit de commande fournit à chaque élément piézoélectrique (15) une tension de commande de déformation de cet élément.

13. Appareil selon l'une des revendications 1 à 12, **caractérisé en ce que** l'angle d'inclinaison du miroir de renvoi (1) est de 45°.

14. Appareil selon l'une des revendications 11 à 13, **caractérisé en ce qu'**il comprend un ensemble motorisé permettant de déplacer la tête optique (4) en translation suivant l'axe (X-X') du cylindre et de déplacer en rotation la partie d'extrémité (4a) autour de cet axe relativement au corps (4d) de la tête optique (4).

15. Appareil selon la revendication 14, **caractérisé en ce que** le circuit de commande est une commande numérique programmée pour piloter les moyens de liaison (15) du miroir (1) et l'ensemble motorisé pour réaliser les empreintes de formes variées adaptées aux conditions de charge du cylindre.

16. Appareil selon l'une des revendications 11 à 15, **caractérisé en ce que** la tête optique (4) comprend une lentille de focalisation (20) montée dans un support (21) par l'intermédiaire d'entretoises internes (22, 23) positionnant la lentille à une distance focale prédéterminée du miroir (1) et un moyen de réglage précis (24, 25, 26) de la position axiale du support (21) de la lentille (20) relativement au corps (4d) de la tête optique (4).

17. Appareil selon la revendication 16, **caractérisé en ce que** le moyen de réglage comprend un outil en forme de bouton de manoeuvre (24) muni d'un doigt (25) pouvant être introduit dans un trou radial (4c) de la partie d'extrémité (4a) de la tête optique (4) et se terminant par un ergot (26) coopérant avec une rainure (21a) du support (21) de la lentille (20) pour déplacer axialement le support (21) en tournant le doigt (25) introduit dans le trou radial (4c) à l'aide du bouton de manoeuvre (24).

18. Appareil selon l'une des revendications 11 à 17, **caractérisé en ce que** la tête optique (4) comprend un conduit (4e) aménagé dans le corps de celle-ci pour acheminer un gaz d'apport, tel que de l'azote ou de l'argon, dans la fenêtre (4b) de la partie d'extrémité (4a) de la tête (4) au droit de la fenêtre.

19. Appareil selon l'une des revendications 11 à 18, **caractérisé en ce que** la tête optique (4) comprend des moyens de refroidissement interne (4f) permettant de maintenir la température du miroir (1) à une valeur déterminée.

20. Appareil selon l'une des revendications précédentes, **caractérisé en ce que** le laser est du type YAG.

21. Appareil selon la revendication 20, **caractérisé en ce que** le laser YAG fonctionne en mode continu ou en mode déclenché et la commande numérique effectue la synchronisation de la source laser en mode déclenché.

22. Procédé de traitement par laser de la surface d'une paroi d'alésage (2a) d'un cylindre (2) par exemple ceux d'un moteur à combustion interne notamment de véhicule automobile pour un usinage de précision de cette surface, consistant à réfléchir le faisceau (F) du laser sur la surface de la paroi d'alésage (2a) du cylindre par un miroir plan (1) disposé sur un support (6) incliné d'un angle déterminé par rapport à l'axe X-X' du cylindre (2), **caractérisé en ce qu'**il consiste à exciter de façon commandée des moyens de liaison (15) entre le support (6) et le miroir (1) pour qu'il effectue de micro-déplacements relativement au support (6) de façon que le faisceau (F) du laser soit déplacé relativement à la surface de laparoi d'alésage (2a) du cylindre, le faisceau (F) ayant une intensité permettant de réaliser sur la surface de la paroi d'alésage (2a) du cylindre des sillons définissant des empreintes ayant des caractéristiques de formes fermées, par exemple en cercles, ellipses ou rectangulaires, et de profondeur constituant des réservoirs de retenue de lubrifiant adaptés aux conditions de frottement et de température que peut subir la surface de la paroi d'alésage (2a) du cylindre.

23. Procédé selon la revendication 22, **caractérisé en ce que** les empreintes ont des formes différentes d'un endroit à l'autre de la surface de la pièce.

24. Procédé selon la revendication 22 ou 23, **caractérisé en ce que**, dans le cas d'une paroi d'alésage (2a) d'un cylindre (2) d'un moteur à combustion interne, les empreintes ont des formes différentes de haut en bas de la surface de la paroi d'alésage (2a) du cylindre (2) et les empreintes supérieures emmagasinent plus de lubrifiant que les empreintes inférieures.

25. Procédé selon l'une des revendications 22 à 24, **caractérisé en ce qu'**un même sillon a une profondeur différente.

26. Procédé selon l'une des revendications 22 à 25, **caractérisé en ce que** les empreintes sont juxtaposées pour former un réseau de circulation du lubrifiant.

## Patentansprüche

1. Vorrichtung zur Laserbehandlung der Oberfläche einer Bohrungswandung eines Zylinders (2), beispielsweise einer Brennkraftmaschine insbesondere von Kraftfahrzeugen, zwecks Präzisionsbearbeitung dieser Oberfläche, mit einem flachen Spiegel (1), der innerhalb des Zylinders (2) so angeordnet ist, dass er den Laserstrahl (F) zur Wandung (2a) der Bohrung des Zylinders (2) richtet, wobei der Spiegel (1) ferner an einem Träger (6) angeordnet ist, der unter einem bestimmten Winkel zur Achse (X-X') des Zylinders (2) geneigt verläuft, **dadurch gekennzeichnet, dass** die Verbindungsmittel (15) zwischen Spiegel (1) und Träger (6) über eine Steuerschaltung (16) angeregt werden können, um Mikroverlagerungen des Spiegels (1) relativ zum Träger (6) zu gestatten und somit an der Wandung der Bohrung des Zylinders (2) Rillen zu erzeugen, welche Prägungen definieren, die Merkmale geschlossener Formen haben, beispielsweise Kreise, Ellipsen oder Rechtecke, und eine Tiefe aufweisen, die Schmiermittelrückhaltereservoirs bildet, welche auf die Beanspruchungsbedingungen des Zylinders (2) abgestimmt sind.

2. Vorrichtung nach Anspruch 1, **dadurch gekennzeichnet, dass** die vorgenannten Verbindungsmittel piezoelektrische Elemente (15) enthalten und die Steuerschaltung (16) jedem piezoelektrischen Element (15) eine Steuerspannung zur Verformung dieses Elements anlegt.

3. Vorrichtung nach Anspruch 2, **dadurch gekennzeichnet, dass** die piezoelektrischen Elemente (15) in einer Anzahl von drei vorliegen und am Träger (6) mit 120° zueinander angeordnet sind.

4. Vorrichtung nach einem der vorangehenden Ansprüche, **dadurch gekennzeichnet, dass** der Träger (6) des Spiegels (1) Bestandteil einer Antriebseinheit ist, die diesem eine Drehbewegung um die Achse (X-X') des Zylinders (2) und eine Verschiebebewegung entlang dieser Achse ermöglicht.

5. Vorrichtung nach Anspruch 4, **dadurch gekennzeichnet, dass** die Antriebseinheit eine Welle (7) enthält, von der ein Ende innerhalb des Zylinders (2) den Träger (6) des Spiegels (1) abstützt, sowie zwei Motoren (8, 9), vorzugsweise Stellmotoren, die mechanisch mit dem anderen Ende der Welle (7) verbunden sind, das sich außerhalb des Zylinders (2) befindet, so dass der eine Motor (9) die Welle (7) drehend antreibt und der andere Motor (8) diese Welle translatorisch verschiebt.

6. Vorrichtung nach Anspruch 5, **dadurch gekennzeichnet, dass** sie eine numerische Steuerschaltung (13) für die beiden Elektromotoren (8, 9) enthält, so dass die entsprechenden Verlagerungen zum Verschieben und Verdrehen der den Träger (6) des Spiegels (1) abstützenden Welle (7) koordiniert werden, um Prägungen mit auf die Beanspruchungsbedingungen des Zylinders abgestimmten, veränderlichen Formen zu erzeugen.

7. Vorrichtung nach einem der vorangehenden Ansprüche, **dadurch gekennzeichnet, dass** sie einen Optikkopf (4) enthält, der teilweise im Zylinder (2) aufgenommen ist, den Laserstrahl (F) über einen Lichtleiter (5) empfängt, um ihn auf den Spiegel (1) zu fokussieren, und an einer Schwenkachse verschwenkbar gelagert ist, um dessen Neigung zur Achse (X-X') des Zylinders (2) zu gestatten.

8. Vorrichtung nach Anspruch 6 und 7, **dadurch gekennzeichnet, dass** sie einen Elektromotor (14) zum Steuern der Schwenkbewegung des Fokussier-Optikkopfs (4) enthält, der über die vorgenannte numerische Steuerschaltung (13) betätigt wird.

9. Vorrichtung nach Anspruch 2 und 6, **dadurch gekennzeichnet, dass** die numerische Steuerschaltung (13) den Betrieb der Steuerschaltung der piezoelektrischen Elemente (15) bestimmt.

10. Vorrichtung nach Anspruch 7 oder 8, **dadurch gekennzeichnet, dass** der Neigungswinkel des Fokussier-Optikkopfs (4) in einem Bereich von bis zu etwa 30° beiderseits der Achse (X-X') des Zylinders (2) liegt.

11. Vorrichtung zur Laserbehandlung der Oberfläche einer Bohrungswandung eines Zylinders (2), beispielsweise einer Brennkraftmaschine insbesondere von Kraftfahrzeugen, zwecks Präzisionsbearbeitung dieser Oberfläche, mit einem flachen Spiegel (1), der innerhalb des Zylinders (2) so angeordnet ist, dass er den Laserstrahl (F) zur Wandung (2a) der Bohrung des Zylinders (2) richtet, wobei der Spiegel (1) in einem Endbereich (4a) eines Optikkopfs (4) zum Fokussieren des Laserstrahls auf den Spiegel (1) aufgenommen ist, der unter einem bestimmten Winkel zur Achse (X-X') des Zylinders geneigt verläuft, um den Laserstrahl (F) radial zum Zylinder (2) durch ein Fenster (4b) des Endbereichs (4a) des Optikkopfs (4) hindurch zu richten, **dadurch gekennzeichnet, dass** der Spiegel (1) über Verbindungsmittel (15) am Endbereich (4a) befestigt ist, die über eine Steuerschaltung angeregt werden können, um Mikroverlagerungen des Spiegels (1) relativ zum Endbereich (4a) und somit des Auftreffpunkts des Laserstrahls (F) auf die Fläche der Bohrungswandung (2a) zu gestatten, so dass an dieser Fläche Rillen erzeugt werden, welche Prägungen definieren, die Merkmale geschlossener Formen haben, beispielsweise Kreise, Ellipsen oder Rechtecke, und eine Tiefe aufweisen, die Schmiermittelrückhaltereservoirs bildet, welche auf die Beanspruchungsbedingungen des Zylinders abgestimmt sind.

12. Vorrichtung nach Anspruch 11, **dadurch gekennzeichnet, dass** die Verbindungsmittel piezoelektrische Elemente (15) enthalten und die Steuerschaltung jedem piezoelektrischen Element (15) eine Spannung zum Steuern der Verformung dieses Elements anlegt.

13. Vorrichtung nach einem der Ansprüche 1 bis 12, **dadurch gekennzeichnet, dass** der Neigungswinkel des Umlenkspiegels (1) 45° beträgt.

14. Vorrichtung nach einem der Ansprüche 11 bis 13, **dadurch gekennzeichnet, dass** sie eine Antriebseinheit enthält, die es ermöglicht, den Optikkopf (4) entlang der Achse (X-X') des Zylinders translatorisch zu verschieben und den Endbereich (4a) um diese Achse relativ zum Körper (4d) des Optikkopfs (4) zu verdrehen.

15. Vorrichtung nach Anspruch 14, **dadurch gekennzeichnet, dass** die Steuerschaltung eine numerische Schaltung ist, die so programmiert ist, dass sie die Verbindungsmittel (15) des Spiegels (1) und die Antriebseinheit ansteuert, um die Prägungen mit auf die Beanspruchungsbedingungen des Zylinders abgestimmten, veränderlichen Formen zu erzeugen.

16. Vorrichtung nach einem der Ansprüche 11 bis 15, **dadurch gekennzeichnet, dass** der Optikkopf (4) eine Fokussierlinse (20) enthält, die über Innenstege (22, 23) in einem Träger (21) montiert ist, welche die Linse in einer vorbestimmten Brennweite vom Spiegel (1) positionieren, sowie ein Mittel (24, 25, 26) zum präzisen Einstellen der axialen Stellung des Trägers (21) der Linse (20) relativ zum Körper (4d) des Optikkopfs (4).

17. Vorrichtung nach Anspruch 16, **dadurch gekennzeichnet, dass** das Einstellmittel ein Instrument in Form eines Bedienknopfs (24) enthält, der mit einem Finger (25) versehen ist, der in ein radiales Loch (4c) des Endbereichs (4a) des Optikkopfs (4) einführbar ist und mit einem Vorsprung (26) endet, der mit einer Nut (21a) des Trägers (21) der Linse (20) zusammenwirkt, um den Träger (21) durch Drehen des in das radiale Loch (4c) eingeführten Fingers (25) mit Hilfe des Bedienknopfs (24) axial zu verlagern.

18. Vorrichtung nach einem der Ansprüche 11 bis 17, **dadurch gekennzeichnet, dass** der Optikkopf (4) eine im Körper desselben ausgeführte Leitung (4e) enthält, um ein Zuführgas, wie etwa Stickstoff oder Argon, in das Fenster (4b) des Endbereichs (4a) des Kopfs (4) in senkrechter Verlängerung des Fensters zu leiten.

19. Vorrichtung nach einem der Ansprüche 11 bis 18, **dadurch gekennzeichnet, dass** der Optikkopf (4) Innenkühlmittel (4f) enthält, die es ermöglichen, die Temperatur des Spiegels (1) auf einen bestimmten Wert zu halten.

20. Vorrichtung nach einem der vorangehenden Ansprüche, **dadurch gekennzeichnet, dass** der Laser vom Typ YAG-Laser ist.

21. Vorrichtung nach Anspruch 20, **dadurch gekennzeichnet, dass** der YAG-Laser kontinuierlich oder gepulst betrieben wird und die numerische Steuerung für die Taktung der Laserquelle im gepulsten Betrieb sorgt.

22. Verfahren zur Laserbehandlung der Oberfläche einer Bohrungswandung (2a) eines Zylinders (2), beispielsweise einer Brennkraftmaschine insbesondere von Kraftfahrzeugen, zwecks Präzisionsbearbeitung dieser Oberfläche, das darin besteht, den Laserstrahl (F) auf die Oberfläche der Bohrungswandung (2a) des Zylinders über einen flachen Spiegel (1) zu reflektieren, der an einem Träger (6) angeordnet ist, der unter einem bestimmten Winkel zur Achse (X-X') des Zylinders (2) geneigt verläuft, **dadurch gekennzeichnet, dass** es darin besteht, Verbindungsmittel (15) zwischen Träger (6) und Spiegel (1) gesteuert so anzuregen, dass Mikroverlagerungen relativ zum Träger (6) so erfolgen, dass der Laserstrahl (F) relativ zur Oberfläche der Bohrungswandung (2a) des Zylinders verlagert wird, wobei der Strahl (F) eine solche Intensität hat, dass auf der Oberfläche der Bohrungswandung (2a) des Zylinders (2) Rillen erzeugt werden, welche Prägungen definieren, die Merkmale geschlossener Formen haben, beispielsweise Kreise, Ellipsen oder Rechtecke, und eine Tiefe aufweisen, die Schmiermittelrückhaltereservoirs bildet, welche auf die Reib- und Temperaturbedingungen abgestimmt sind, welchen die Oberfläche der Bohrungswandung (2a) des Zylinders ausgesetzt sein kann.

23. Verfahren nach Anspruch 22, **dadurch gekennzeichnet, dass** die Prägungen Formen haben, die von einer Stelle der Oberfläche des Werkstücks zur anderen variieren.

24. Verfahren nach Anspruch 22 oder 23, **dadurch gekennzeichnet, dass** bei einer Bohrungswandung (2a) eines Zylinders (2) einer Brennkraftmaschine die Prägungen Formen haben, die vom oberen Bereich der Oberfläche der Bohrungswand (2a) des Zylinders (2) zum unteren Bereich variieren, und die oberen Prägungen mehr Schmiermittel speichern als die unteren Prägungen.

25. Verfahren nach einem der Ansprüche 22 bis 24, **dadurch gekennzeichnet, dass** ein und dieselbe Rille eine unterschiedliche Tiefe hat.

26. Verfahren nach einem der Ansprüche 22 bis 25, **dadurch gekennzeichnet, dass** die Prägungen nebeneinander liegen, um ein Schmiermittelumlaufnetz zu bilden.

## Claims

1. Device for laser treatment of the internal surface of a cylinder (2), for example those of an internal combustion engine, particularly of a motor vehicle, for precision machining of this surface, comprising a flat mirror (1) arranged inside the cylinder (2) so as to direct the beam (F) of the laser towards the internal surface (2a) of the cylinder (2), the mirror (1) also being arranged on a support (6) inclined at a certain angle in relation to the axis (X-X¹) of the cylinder (2), **characterised by** the fact that the means of connection (15) between the mirror (1) and the support (6) may be energised by a control circuit (16) to allow micro movements of the mirror (1) in relation to the support (6) and in this way make grooves on the internal surface of the cylinder (2), which define indentations with the characteristics of closed shapes, for example circles, ellipses or rectangles, and a depth forming reservoirs for holding lubricant suitable for the loading conditions of the cylinder (2).

2. Device according to claim 1, **characterised by** the fact that the means of connection indicated above comprise piezoelectric elements (15) and the control circuit (16) supplies each piezoelectric element (15) with a control voltage to distort this element.

3. Device according to claim 2, **characterised by** the fact that the piezoelectric elements (15) are three in number and arranged on the support (6) at 120° from each other.

4. Device according to one of the previous claims, **characterised by** the fact that the support (6) of the mirror (1) forms part of a motorised unit, allowing it to move rotating around the axis (X-X¹) of the cylinder (2) and to move travelling along this axis.

5. Device according to claim 4, **characterised by** the fact that the motorised unit comprises a shaft (7), one end of which supports the support (6) of the mirror (1) inside the cylinder (2), and two motors (8, 9), preferably servo-controlled, mechanically connected to the other end of the shaft (7) situated outside the cylinder (2) so that one (9) of the motors drives the shaft (7) rotationally and the other motor (8) moves this shaft in a translational movement.

6. Device according to claim 5, **characterised by** the fact that it comprises a digital control circuit (13) of the two electric motors (8, 9) so as to coordinate the combined translational and rotary movements of the shaft (7) carrying the support (6) of the mirror (1) to make indentations of various shapes suitable for the loading conditions of the cylinder.

7. Device according to one of the previous claims, **characterised by** the fact that it comprises an optical head (4) housed partly in the cylinder (2), receiving the laser beam (F) by means of an optical fibre (5) to focus it on the mirror (1) and fitted pivoting on a pivoting axis to allow it to be inclined in relation to the axis (X-X¹) of the cylinder (2).

8. Device according to claims 6 and 7, **characterised by** the fact that it comprises an electric motor (14) to control the pivoting of the optical focussing head (4), which is driven by the digital control circuit (13) indicated above.

9. Device according to claims 2 and 6, **characterised by** the fact that the digital control circuit (13) governs the operation of the control circuit of the piezoelectric elements (14).

10. Device according to claim 7 or 8, **characterised by** the fact that the angle of inclination of the optical focussing head (4) is situated in a range up to approximately 30° on both side sides of the axis (X-X¹) of the cylinder (2).

11. Device for laser treatment of the internal surface of a cylinder (2), for example those of an internal combustion engine, particularly of a motor vehicle, for precision machining of this surface, comprising a flat mirror (1) arranged inside the cylinder (2) so as to direct the beam (F) of the laser towards the internal surface (2a) of the cylinder (2), the mirror (1) being housed in one end (4a) of an optical head (4) for focussing the laser beam on the mirror (1), which is inclined at a certain angle in relation to the axis X-X¹ of the cylinder to direct the laser beam (F) radially to the cylinder (2) through a window (4b) on the end (4a) of the optical head (4), **characterised by** the fact that the mirror (1) is fixed to the end (4a) by means of connection (15) which may be energised by a control circuit to allow micro movements of the mirror (1) in relation to the end (4a) and therefore the point of impact of the laser beam (F) on the internal surface (2a) so as to make grooves on this surface, which define indentations with the characteristics of closed shapes, for example circles, ellipses or rectangles, and a depth forming reservoirs for holding lubricant suitable for the loading conditions of the cylinder.

12. Device according to claim 11, **characterised by** the fact that the means of connection comprise piezoelectric elements (15) and the control circuit supplies each piezoelectric element (15) with a control voltage to distort this element.

13. Device according to one of claims 1 to 12, **characterised by** the fact that the angle of inclination of the return mirror (1) is 45°.

14. Device according to one of claims 11 to 13, **characterised by** the fact that it comprises a motorised unit, allowing the optical head (4) to move in a translational movement along the axis (X-X¹) of the cylinder and the end (4a) to move rotating around this axis in relation to the body (4d) of the optical head (4).

15. Device according to claim 14, **characterised by** the fact that the control circuit is a digital control programmed to control the means of connection (15) of the mirror (1) and the motorised unit to make indentations of various shapes suitable for the loading conditions of the cylinder.

16. Device according to one of claims 11 to 15, **characterised by** the fact that the optical head (4) comprises a focussing lens (20) mounted in a support (21) by means of internal struts (22, 23), positioning the lens at a predetermined focal distance from the mirror (1) and a means of precise adjustment (24, 25, 26) of the axial position of the support (21) of the lens (20) in relation to the body (4d) of the optical head (4).

17. Device according to claim 16, **characterised by** the fact that the means of adjustment comprises a tool in the form of a manoeuvring knob (24) fitted with a pin (25), which may be put into a radial hole (4c) of the end (4a) of the optical head (4), and ending in a peg (26) working with a groove (21a) of the support (21) of the lens (20) to move the support (21) axially by turning the pin (25), which has been put into the radial hole (45c), using the manoeuvring knob (25).

18. Device according to one of claims 11 to 17, **characterised by** the fact that the optical head (4) comprises a conduit (4e) arranged in its body to supply a gas, such as nitrogen or argon, in the window (4b) of the end (4a) of the head (4) at right angles to the window.

19. Device according to one of claims 11 to 18, **characterised by** the fact that the optical head (4) comprises means of internal cooling (4f), allowing the temperature of the mirror (1) to be maintained at a certain value.

20. Device according to one of the previous claims, **characterised by** the fact that the laser is of the YAG type.

21. Device according to claim 20, **characterised by** the fact that the YAG laser operates in continuous mode or tripped mode and the digital control provides synchronisation of the laser source in the tripped mode.

22. Method for laser treatment of the internal surface (2a) of a cylinder (2), for example those of an internal combustion engine, particularly of a motor vehicle, for precision machining of this surface, consisting of reflecting the beam (F) of the laser on the internal surface (2a) of the cylinder by a flat mirror (1) arranged on a support (6) inclined at an angle in relation to the axis X-X¹ of the cylinder (2), **characterised by** the fact that it consists of energising the means of connection (15) between the support (6) and the mirror (1) in a controlled way so that it makes micro movements in relation to the support (6) so that the beam (F) of the laser is moved in relation to the internal surface (2a) of the cylinder, the beam (F) having an intensity allowing grooves to be made on the internal surface (2a) of the cylinder, which define indentations with the characteristics of closed shapes, for example circles, ellipses or rectangles, and a depth forming reservoirs for holding lubricant suitable for the friction and temperature conditions to which the internal surface (2a) of the cylinder may be subjected.

23. Method according to claim 22, **characterised by** the fact that the indentations differ in shape from one place to another on the surface of the part.

24. Method according to claim 22 or 23, **characterised by** the fact that in the case of an internal surface (2a) of a cylinder (2) of an internal combustion engine the indentations have different shapes from top to bottom of the internal surface (2a) of the cylinder (2) and the upper indentations store more lubricant than the lower indentations.

25. Method according to one of claims 22 to 24, **characterised by** the fact that one and the same groove has a different depth.

26. Method according to one of claims 22 to 25, **characterised by** the fact that these indentations are juxtaposed to form a lubricant circulation network.
